# EUROPÄISCHE PATENTSCHRIFT

(11) **EP 1 845 312 B1**
(45) Veröffentlichungstag und Bekanntmachung des Hinweises auf die Patenterteilung: **16.11.2011**
(21) Anmeldenummer: 07007411.7
(22) Anmeldetag: 11.04.2007
(51) Int. Cl.: F24D 3/14

(54) **Befestigungssystem für Fussbodenheizungsrohre auf einer Gittermatte**
Attachment system for floor heating pipes on a grid
Système de fixation pour tuyaux de chauffage par le sol d'un treillis

(30) Priorität: 12.04.2006 DE 102006017631
(43) Veröffentlichungstag der Anmeldung: 17.10.2007
(73) Patentinhaber: Rettig ICC bv, 6199 AA Maastricht-Airport (NL)
(72) Erfinder: Falk, Manfred, 38642 Goslar (DE); Kloetzel, Olaf, 38667 Bad Harzburg (DE)
(74) Vertreter: Seewald, Jürgen

(56) Entgegenhaltungen:
- EP-A1- 0 635 684
- EP-A2- 0 798 503
- AT-B- 372 169
- DE-A1- 3 014 789

## Beschreibung

Die vorliegende Erfindung betrifft eine Befestigungssystem für Fußbodenheizungsrohre gemäß dem Oberbegriff des Anspruchs 1.

Vor der Einführung dieses Befestigungssystems in die Praxis wurden die Rohrhalteclipse per Hand auf die Drähte oder Rippen einer auf dem Unterbau liegenden Gittermatte aufgedrückt. Dazu musste das Haltemaul jedes Rohrhalteclips mit den Fingern zusammengedrückt werden, damit sich die Klemmöffnung spreizen und hinter den Drähten bzw. Rippen der Gittermatte einrasten konnte. Für dieses Setzen der Rohrhalteclipse waren erhebliche Fingerkräfte erforderlich, so dass diese Tätigkeit auf Dauer sehr anstrengend war. Zudem musste sie auf Knien bzw. in gebückter Haltung durchgeführt werden.

Das gattungsgemäße Befestigungssystem, wie es aus der EP 0 635 684 B1 und der AT-PS 372 169 hervorgeht, beseitigt die oben genannten Nachteile. Aufgrund eines langen, stielartigen Führungsrohres, in dem die mit dem Stempel verbundene Setzstange läuft, kann in aufrechter Haltung gearbeitet werden, wobei der Kraftaufwand für das Setzen eines Rohrhalteclips gering ist.

Aufgabe der vorliegenden Erfindung ist es, ein weiteres gattungsgemäßes Befestigungssystem für Fußbodenheizungsrohre auf einer Gittermatte zur Verfügung zu stellen.

Diese Aufgabe wird erfindungsgemäß mit einem Befestigungssystem gelöst, welches die Merkmale des Anspruchs 1 aufweist.

Weitere vorteilhafte Ausgestaltungen der Erfindung ergeben sich aus den Unteransprüchen.

Die Erfindung wird nachstehend anhand eines Ausführungsbeispiels näher erläutert. In der dazugehörigen Zeichnung zeigt:
- Fig. 1: eine Seitenansicht eines Montagegerätes des Befestigungssystems,
- Fig. 2.1: einen schematischen Schnitt A-A gemäß Fig. 1 am Beginn des Ausstoßens eines Rohrhalteclips aus dem Montagegerät,
- Fig. 2.2: eine Darstellung gemäß Fig. 2.1 in einer Zwischenphase des Ausstoßens eines Rohrhalteclips,
- Fig. 2.3: eine Darstellung gemäß Fig. 2.1 nach erfolgtem Ausstoß eines Rohrhalteclips aus dem Montagegerät, und
- Fig. 3: einen Rohrhalteclip,

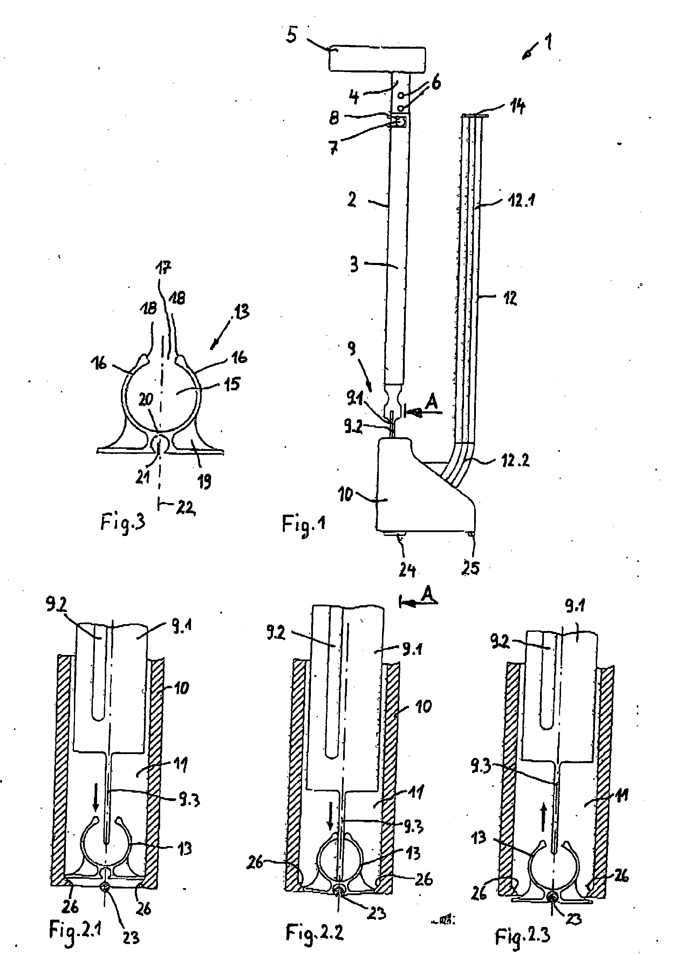

Das in Fig. 1 gezeigte Montagegerät 1 weist eine stielartige Setzstange 2 auf. Diese setzt sich aus einem längeren Basisrohr 3 und einem kürzeren Verstellrohr 4 zusammen, welches von oben teleskopisch in das Basisrohr 3 eingesteckt ist. Am oberen Ende des Verstellrohres 4 ist ein Handgriff 5 vorgesehen. Das Verstellrohr 4 dient der Längeneinstellung der Setzstange 2, damit ein jeweiliger Nutzer des Geräts 1 in aufrechter, ergonomisch günstiger Körperhaltung arbeiten kann. Dazu sind im Verstellrohr 4 sich diametral gegenüberliegende Lochreihen 6 vorgesehen, die durch Herausziehen bzw. Hineinstecken des Verstellrohres 4 in das Basisrohr 3 in fluchtende Ausrichtung mit einem, aus der Zeichnung nicht ersichtlichen, am oberen Ende des Basisrohrs 3 vorgesehenen Lochpaar bringbar sind. Die gewählte Einstellung ist durch einen Bolzen 7, der die jeweiligen Lochpaare des Verstellrohres 4 und des Basisohres 3 durchsetzt, arretierbar. Der Bolzen 7 ist durch einen Sicherungsbügel 8 gegen ein Herauswandern aus den Lochpaarungen von Verstellrohr 4 und Basisrohr 3 gesichert.

Am unteren Ende des Basisrohrs 3 geht die Setzstange 2 in einen Stempel 9 über. Dieser hat die Form eines Schiebers 9.1 mit rechteckigem Querschnitt, der durch eine Längsrippe 9.2 verstärkt ist. Der Schieber 9.1, und damit auch die Setzstange 2, ist in einer aus der Zeichnung nicht ersichtlichen, in einem den unteren Abschluss des Montagegeräts 1 bildenden Aufsetzfuß 10 vorgesehenen Führung in Längsrichtung verschiebbar geführt. Damit entfällt die bei den bekannten Montagegeräten erforderliche stielartige Führung der Setzstange 2, was den Aufbau des Gerätes vereinfacht. Das untere Ende des Schiebers 9.1 geht in einen Ausstoßfinger 9.3 über, der in eine Ausstoßkammer 11 des Aufsetzfußes 10 von oben hineinragt. Um ein vollständiges Herausziehen der Setzstange 2 aus dem Aufsetzfuß 10 zu verhindern, ist zwischen diesen beiden Bauteilen eine nicht dargestellte Auszugssperre vorgesehen.

In die Ausstoßkammer 11 mündet das untere Ende eines Magazins 12, welches eine Reihe von Rohrhalteclips 13 aufnimmt und daher als Hohlprofil ausgeführt ist. Das Magazin 12 verläuft zunächst in einem längeren Bereich 12.1 parallel zur Setzs ange 2 und mündet dann an seinem unteren Ende in einem kürzeren, bogenförmigen Bereich 12.2 in die Ausstoßkammer 11. Das Magazin 12 kann abnehmbar, d.h. auswechselbar, mit dem Aufsetzfuß 10 oder aber auch unlösbar mit diesem verbunden sein. Am oberen Ende des Magazins 12 ist eine Sicherung 14 vorgesehen, die ein Herausfallen der Rohrhalteclips 13 aus dem Magazin 12 verhindert.

Die Rohrhalteclipse 13 sind aus Kunststoff gefertigt und weisen ein Haltemaul 15 auf, welches aus zwei bogenförmigen Schenkeln 16 gebildet ist, wobei die lichte Weite zwischen den Schenkeln 16 auf den Durchmesser eines zu verlegenden Fußbodenheizungsrohres abgestimmt ist. Die oberen Enden der Schenkel 16 lassen eine Durchtrittsöffnung 17 frei und sind mit Auflaufschrägen 18 versehen. An ihren unteren Enden gehen die Schenkel 16 in einen Fuß 19 über, dessen Enden die Schenkel 16 des Haltemauls 15 beidseitig überragen. In dem Fuß 19 ist unter Belassung eines federnden Materialsteges 20 zum Haltemaul 15 hin eine nach unten offene Klemmöffnung 21 vorgesehen. Die Schenkel 16 des Haltemauls 15, der Fuß 19 sowie die Klemmöffnung 21 sind symmetrisch zu einer Mittellinie 22 ausgebildet.

Nachfolgend wird das Setzen von Rohrhalteclips 13 auf einer auf einem Unterbau aufliegenden Gittermatte beschrieben. Von dieser Gittermatte ist in den Figuren 2.1 bis 2.3 lediglich ein Draht 23 dargestellt.

Zur exakten Ausrichtung des Montagegerätes 1 auf dem Draht 23 sind an der Unterseite des Aufsetzfußes 10 zwei voneinander beabstandete Führungen 24, 25 vorgesehen, die miteinander fluchtende Längsnuten in U-Form aufweisen. Diese Nuten sind aus der Zeichnung nicht ersichtlich. Wenn der Draht 23 der Gittermatte in beiden Nuten der Führungen 24, 25 liegt, ist das Montagegerät 1 exakt ausgerichtet, so dass die Klemmöffnung 21 eines im Ausstoßschacht 11 befindlichen Rohrhalteclips 13 genau über dem Draht 23 angeordnet ist. Das ist in Fig. 2.1 dargestellt. Aus dieser Darstellung ist auch ersichtlich, dass der Faß 19 des Rohrhalteclips 13 mit seinen beiden Enden auf einer am unteren Ausgang des Ausstoßschachtes 11 vorgesehenen Verengung 26 aufsteht. Diese Verengung 26 verhindert, dass der Rohrhalteclip 13 unter Schwerkraftwirkung aus dem Ausstoßschacht 11 herausfällt.

Bei der in Fig. 2.1 gezeigten Situation, also wenn der Aufsetzfuß 10 mit den beiden Führunger 24, 25, die in den Fig. 2.1 bis 2.3 weggelassen wurden, aufsteht, wird durch Druck auf den Handgriff 5 die Setzstange 2 nach unten gedrückt. Dadurch taucht der Ausstoßfinger 9.3 tiefer in das Haltemaul 15 des Rohrhalteclips 13 ein, bis er schließlich auf den Materialsteg 20 auftrifft. Aufgrund des dadurch ausgeübten Druckes wird der auf der Verengung 26 des Ausstoßschachtes 11 aufliegende Fuß 19 des Rohrhalteclips 13 an beiden Enden nach oben gebogen, während sich das Haltemaul 15 verengt und die Klemmöffnung 21 aufgespreizt wird, so dass sie problemlos über den Draht 23 gleiten kann. Gleichzeitig passieren die Enden des Fußes 19 des Rohrhalteclips 13 die Verengung 26 am Ende des Ausstoßschachtes 11 und die Klemmöffnung 21verrastet hinter dem Draht 23, wie in Fig. 2.3 dargestellt ist.

Für den nächsten Setzvorgang wird nun die Setzstange 2 am Handgriff 5 nach oben gezogen, wodurch der nächste Rohrhalteclip 13 aus dem Magazin 12 in den Ausstoßschacht 11 einrutschen kann. Das Montagegerät 1 ist nun für den nächsten Setzvorgang vorbereitet.

Bei dem oben beschriebenen Montagegerät 1 muss die Setzstange 2 zur Vorbereitung eines Setzvorgangs manuell nach oben gezogen werden. Es ist ebenso möglich, die Setzstange 2 gegen eine Druckfeder arbeiten zu lassen, die dann die Setzstange 2 nach einem Setzvorgang wieder in ihre Ausgangslage drückt.

Nach dem Setzen der Rohrhalteclips 13 in den gewünschten Verlegeabständen auf der Gittermatte werden dann die Fußbodenheizungsrohre von oben in die Rohrhalteclips 13 eingedrückt. Dabei setzt die Rohrwandung auf die Auflaufschrägen 18 des Haltemauls 15 auf, wodurch dessen Schenkel 16 gespreizt werden. Nachdem das Fußbodenheizungsrohr die Durchtrittsöffnung 17 passiert hat, federn die Schenkel 16 wieder ein, so dass das Fußbodenheizungsrohr bis zur Estricheinbringung sicher auf der Gittermatte fixiert ist.

## Patentansprüche

1. Befestigungssytem für Fußbodenheizungsrohre auf einer Gittermatte, bestehend aus
a) einem Rohrhalteclip (13)
- mit einem Haltemaul (15) zur Aufnahme eines Heizungsrohres
- das Haltemaul (15) geht in einen Fuß (19) über, dessen Enden das Haltemaul (15) beidseitig überragen
- in dem Fuß (19) ist unter Belassung eines federnden Materialstegs (20) zum Haltemaul (15) eine nach unten offene Klemmöffnung (21) vorgesehen, und
b) einem Montagegerät (1)
- mit einer stielartigen Setzstange (2)
- mit einem Aufsetzfuß (10)
- die Setzstange (2) steht an ihrem oberen Ende mit einem Handgriff (5) in Wirkverbindung und weist an ihrem unteren Ende einen Stempel (9.3) auf
- mit einem im Aufsetzfuß (10) angeordneten Ausstoßschacht (19), in den der Stempel (9.3) hineinragt, und der einen Rohrhalteclip (13) aufnimmt
- bei Betätigung der Setzstange (2) mit dem Handgriff (5) trifft der Stempel (9.3) auf den Materialsteg (20) auf und drückt den Rohrhalteclip (13) unter Spreizung der Klemmöffnung (21) auf einen Draht oder Steg (23) der Gittermatte auf, **dadurch gekennzeichnet, dass** die Enden des Fußes (19) des Rohrhalteclips (13) unter dem Druck des Stempels .(9.3) auf eine am Ausgang des Ausstoßschachtes (11) vorgesehene Verengung (26) auflaufen und diese nur unter Spreizung der Klemmöffnung (21) passieren können.

2. Befestigungssystem nach Anspruch 1, **dadurch gekennzeichnet, dass** sich die Setzstange (2) aus einem Basisrohr (3) und einem Verstellrohr (4) zusammensetzt, welches höhenverstellbar in das Basisrohr (3) eingesleckt ist.

3. Befestigungssystem nach Anspruch 1 oder 2, **dadurch gekennzeichnet, dass** die Setzstange (2) lediglich im Aufsetzfuß (10) geführt ist.

4. Befestigungssystem nach einem der vorstehenden Ansprüche, **dadurch gekennzeichet, dass** das Montagegerät (1) ein Magazin (12) für die Rohrhaleclipse (13) aufweist, welches in die Ausstoßkammer (11) des Aufselzfußes (10) mündet.

5. Befestigungssystem nach Anspruch 4, **dadurch gekennzeichnet, dass** das Magazin (12) auswechselbar am Aufsetzfuß (10) befestigt ist.

6. Befestigungssystem nach einem der vorstehenden Ansprüche, **dadurch gekennzeichnet, dass** auf der Unterseite des Aufsetzfußes (10) zwei voneinander beabstandete Führungen (24, 25) mit miteinander fluchtender Aufnahmenuten für eine Rippe oder einen Draht (23) der Gittermatte angeordnet sind, die einer senkrechten Ebene mit der Klemmöffnung (21) eines im Ausstoßschacht (11) befindlichen Rohrhalteclips (13) liegen.

7. Befestigungssystem nach einem der vorstehenden Ansprüche, **dadurch gekennzeichet, dass** zwischen der Setzstange (2) und dem Aufsetzfuß (10) eine Auszugssperre vorgesehen ist.

8. Befestigungssytem nach einem der vorstehenden Ansprüche, **dadurch gekennzeichet, dass** die Setzstange (2) gegen eine Druckfeder arbeitet.

## Claims

1. Fastening system for underfloor heating pipes on a lattice-type mat, said system consisting of
a) a pipe-retaining clip (13)
- having a retaining throat (15) for receiving a heating pipe
- the retaining throat (15) merges into a foot (19) whose ends protrude beyond said retaining throat (15) on both sides
- a downwardly open gripping aperture (21) is provided in the foot (19), leaving a resilient web of material (20) towards the retaining throat (15), and
b) a fitting appliance (1)
- having a stick-like setting bar (2)
- having an attaching foot (10)
- at its upper end, the setting bar (2) is in operative connection with a handle (5) and has a ram (9.3) at its lower end
- having an ejecting shaft (11) which is arranged in the attaching foot (10) and into which the ram (9.3) protrudes, and which receives a pipe-retaining clip (13)
- when the setting bar (2) is actuated by means of the handle (5), the ram (9.3) impinges upon the web of material (20) and presses the pipe-retaining clip (13) onto a wire or web (23) of the lattice-type mat while forcing the gripping aperture (21) apart,
**characterised in that**
the ends of the foot (19) of the pipe-retaining clip (13) run up, under the pressure from the ram (9.3), onto a constriction (26) provided at the outlet of the ejecting shaft (11) and are able to pass through said constriction only with forcing-apart of the gripping aperture (21) .

2. Fastening system according to claim 1,
**characterised in that**
the setting bar (2) is composed of a base tube (3) and an adjusting tube (4) which is inserted in said base tube (3) in a vertically adjustable manner.

3. Fastening system according to claim 1 or 2,
**characterised in that**
the setting bar (2) is only guided in the attaching foot (10).

4. Fastening system according to one of the preceding claims,
**characterised in that**
the fitting appliance (1) has a magazine (12) for the pipe-retaining clips (13) which opens into the ejecting chamber (11) of the attaching foot (10).

5. Fastening system according to claim 4,
**characterised in that**
the magazine (12) is fastened to the attaching foot (10) in an exchangeable manner.

6. Fastening system according to one of the preceding claims,
**characterised in that**
there are arranged, on the underside of the attaching foot (10), two guides (24, 25) which are spaced apart from one another and have mutually aligned receiving grooves for a rib or wire (23) belonging to the lattice-type mat, and which lie in a perpendicular plane with the gripping aperture (21) of a pipe-retaining clip (13) located in the ejecting shaft (11).

7. Fastening system according to one of the preceding claims,
**characterised in that**
a withdrawal-inhibitor is provided between the setting bar (2) and the attaching foot (10).

8. Fastening system according to one of the preceding claims,
**characterised in that**
the setting bar (2) operates against a pressure spring.

## Revendications

1. Système de fixation de tuyaux de chauffage au sol sur une natte grillagée, comprenant
a) un clip de fixation de tuyau (13)
- avec une gueule de retenue (15) destinée à recevoir un tuyau de chauffage
- la gueule de retenue (15) se transforme en un pied (19), dont les extrémités dépassent la gueule de retenue (15) des deux côtés
- dans le pied (19) est prévue, tout en laissant une nervure de matière souple (20) vers la gueule de retenue (15), une ouverture de serrage (21) ouverte vers le bas et
b) un appareil de montage (1)
- avec une barre de pose (2) en forme de manche
- avec un pied d'appui (10)
- l'extrémité supérieure de la barre de pose (2) est reliée à une poignée (5) de manière à concourir avec celle-ci et présente à son extrémité inférieure un tampon (9.3)
- avec un puits d'expulsion (11) disposé dans le pied d'appui (10), puits d'expulsion, à l'intérieur duquel le tampon (9.3) fait saillie et qui reçoit un clip de fixation de tuyau (13)
- à actionnement de la barre de pose (2) avec la poignée (5), le tampon (9.3) bute contre la nervure de matière (20) et presse le clip de fixation de tuyau (13), tout en écartant l'ouverture de serrage (21), sur un fil ou une nervure (23) de la natte grillagée, **caractérisé en ce que** sous la pression du tampon (9.3), les extrémités du pied (19) du clip de fixation de tuyau (13) heurtent un rétrécissement (26) prévu à la sortie du puits d'expulsion (11), rétrécissement qu'elles ne peuvent franchir qu'en écartant l'ouverture de serrage (21).

2. Système de fixation suivant la revendication 1, **caractérisé en ce que** la barre de pose (2) se compose d'un tube de base (3) et d'un tube de réglage (4), qui est inséré de manière réglable en hauteur dans le tube de base (3).

3. Système de fixation suivant la revendication 1 ou 2, **caractérisé en ce que** la barre de pose (2) est guidée seulement dans le pied d'appui (10).

4. Système de fixation suivant une des revendications précédentes, **caractérisé en ce que** l'appareil de montage (1) présente un magasin (12) à clips de fixation de tuyaux (13) qui débouche dans la chambre d'expulsion (11) du pied d'appui (10).

5. Système de fixation suivant la revendication 4, **caractérisé en ce que** le magasin (12) est fixé de manière échangeable sur le pied d'appui (10).

6. Système de fixation suivant une des revendications précédentes, **caractérisé en ce que** sur la face inférieure du pied d'appui (10) sont disposés deux dispositifs de guidage (24, 25), écartés l'un de l'autre, avec des rainures de réception, alignées l'une par rapport à l'autre, pour une nervure ou pour un fil (23) de la natte grillagée, qui se situent sur un plan perpendiculaire avec l'ouverture de serrage (21) d'un clips de fixation de tuyau (13) se trouvant dans le puits d'expulsion (11).

7. Système de fixation suivant une des revendications précédentes, **caractérisé en ce qu'**un dispositif de blocage d'extraction est prévu entre la barre de pose (2) et le pied d'appui (10).

8. Système de fixation suivant une des revendications précédentes, **caractérisé en ce que** la barre de pose (2) travaille contre un ressort de pression.
